# EUROPÄISCHE PATENTSCHRIFT

(11) **EP 3 592 622 B1**
(45) Veröffentlichungstag und Bekanntmachung des Hinweises auf die Patenterteilung: **27.10.2021**
(21) Anmeldenummer: 18723744.1
(22) Anmeldetag: 27.04.2018
(51) Int. Cl.: B61D 35/00

(54) **ABWASSERSYSTEM FÜR FAHRZEUGE**
SEWAGE SYSTEM FOR VEHICLES
SYSTÈME D'ÉCOULEMENT DES EAUX USÉES POUR DES VÉHICULES

(30) Priorität: 02.05.2017 DE 102017207336
(43) Veröffentlichungstag der Anmeldung: 15.01.2020
(73) Patentinhaber: Siemens Mobility GmbH, 81739 München (DE)
(72) Erfinder: HUGEMANN, Frank, 47829 Krefeld (DE)
(86) Internationale Anmeldenummer: PCT/EP2018/060850
(87) Internationale Veröffentlichungsnummer: WO 2018/202573

(56) Entgegenhaltungen:
- EP-A1- 1 866 201
- DE-A1- 2 932 585
- DE-A1-102012 023 683
- DE-T2- 60 027 944
- US-A1- 2007 102 370

## Beschreibung

Die vorliegende Erfindung betrifft ein Abwassersystem für Fahrzeuge sowie ein Fahrzeug mit derartigem Abwassersystem.

Bei Abwasser wird typischerweise zwischen Grauwasser und Schwarzwasser unterschieden. Unter Grauwasser wird dabei ein fäkalienfreies, gering verschmutztes Abwasser verstanden, wie es etwa beispielsweise beim Duschen, Baden oder Händewaschen anfällt und zur Aufbereitung zu Brauch- bzw. Betriebswasser dienen kann. Als Schwarzwasser hingegen wird das Abwasser aus Toiletten oder WC-Modulen bezeichnet, welches mit Fäkalien belastet ist.

Bei Abwassersystemen von Fahrzeugen ist bekannt, dass aus einem Handwaschbecken oder einer an das Handwaschbecken angeschlossenen Anlage zur Grauwasseraufbereitung, bei der aus dem eingefüllten Grauwasser Schmutzpartikel bzw. Grauwassersedimente abgeschieden werden, je nach Nutzung Grauwasser über den Fahrzeugboden zum Beispiel in das Gleisbett bei Schienenfahrzeugen oder aber in einen im Unterflurbereich des Fahrzeugs befindlichen Abwassertank ausgelassen wird. Soll das anfallende Grauwasser oder das mit Schmutzpartikeln angereicherte Grauwasser nicht in das Gleisbett, sondern in einen innerhalb des Fahrzeugs befindlichen Abwassertank befördert werden, so muss das anfallende Grauwasser bzw. Grauwassersediment in den oftmals höher gelegenen Abwassertank befördert werden. Dazu muss eine zusätzliche Pumpe oder Hebeanlage und eine zusätzliche Verrohrung erfolgen. Die generell bereits eingeschränkten Platzverhältnisse im Kabinen- und Tankbereich erschweren die Anordnung dieser Bauteile, insbesondere dann, wenn eine zusätzliche Grauwasseraufbereitungseinheit integriert werden soll.

Eine typische Ausstattung bei Abwassersystemen des Standes der Technik ist, dass dem WC-Modul ein Behälter zugeordnet ist, der über eine Vakuumfunktion verfügt, mittels derer das Schwarzwasser aus dem WC-Modul in den Behälter befördert bzw. abgesaugt werden kann.

Die Druckschrift DE 600 27 944 T2 offenbart ein derartiges Vakuumtoilettensystem für Schienenfahrzeuge mit einem Sammelbehälter, der unter Druck gesetzt werden kann, um daran angeschlossene Toiletten durch Öffnen eines Ablassventils zu entleeren. An das Vakuumtoilettensystem kann auch ein Waschbecken angeschlossen werden. Auch die DE 29 32 585 A1 und die EP 1866201 A1 lehren gattungsgemäße Vakuumtoilettensysteme.

Die Aufgabe besteht darin, ein Abwassersystem für ein Fahrzeug zu entwickeln, welches platzsparend und mit geringem Aufwand in ein bestehendes Abwassersystem integriert werden kann.

Erfindungsgemäß wird ein Abwassersystem zur Verfügung gestellt, welches ein Waschbecken und ein WC-Modul umfasst. Ferner umfasst das Abwassersystem einen Behälter, welcher eine Vakuumfunktion zum Befördern von Schwarzwasser aus dem WC-Modul in den besagten Behälter umfasst. Weiterhin umfasst das Abwassersystem eine Grauwasserverbindung, welche das Waschbecken mit dem Behälter verbindet. Dabei ist die Grauwasserverbindung zur Aufnahme von Grauwasser aus dem Waschbecken ausgebildet. Ferner ist der Behälter dazu ausgebildet mittels der Vakuumfunktion das Grauwasser aus der Grauwasserverbindung in den Behälter zu befördern.

Die Grauwasserleitung dient dabei als ein Zwischenpuffer, der eine bestimmte Aufnahmekapazität zur Aufnahme von Grauwasser aus dem Waschbecken aufweist. Die Erfindung hat dabei den Vorteil, dass die Vakuumfunktion des Behälters zwei Funktionen erfüllt, nämlich erstens das Befördern bzw. das Absaugen von Schwarzwasser aus dem WC-Modul in den Behälter sowie zweitens das Befördern bzw. das Absaugen von Grauwasser aus der Grauwasserleitung in diesen Behälter. Das Grauwasser und das Schwarzwasser werden somit im Behälter zusammengeführt und das dadurch gebildete Schwarzwasser kann vorteilhaft gemeinsam abwassertechnisch ebenfalls mittels der Vakuumfunktion des Behälters abgeführt werden. Dabei wird Raum eingespart und installationstechnischer Aufwand gemindert. Ein WC-Modul ist mit anderen Worten eine Toilette oder dergleichen.

Der Behälter ist dabei ein Zwischenbehälter, der mit einem Abwassertank verbunden ist. Dies entspricht der typischen Realisierung eines lokal an ein WC-Modul angeschlossenen Zwischenbehälters in einem Fahrzeug, insbesondere einem Schienenfahrzeug. Vorteilhaft wird durch das Zusammenführen von Grauwasser und Schwarzwasser aus dem WC-Modul keine zusätzliche zum Abwassertank führende Verrohrung für das aus dem Waschbecken kommende Grauwasser benötigt. Kosten und installationstechnischer Aufwand werden somit verringert. Auf eine zusätzliche Pumpe oder Hebeanlage kann durch die Verwendung der Vakuumfunktion des Behälters vermieden werden.

Bevorzugt ist der Behälter derart ausgebildet, dass bei Auslösen der Vakuumfunktion sowohl Schwarzwasser aus dem WC-Modul als auch Grauwasser aus der Grauwasserverbindung in den Behälter befördert wird. Hierbei wird demnach die Entleerung der Grauwasserleitung an die Benutzung des WC-Moduls gekoppelt. In anderen Worten wird bei jeder Auslösung der Vakuumfunktion auch das Grauwasser aus der Grauwasserleitung in den Behälter befördert. Dem liegt zu Grunde, dass im Mittel die Benutzung des Waschbeckens ähnlich häufig ist wie die Benutzung des WC-Moduls, so dass eine stete Entleerung der Grauwasserverbindung erfolgt.

Die Grauwasserverbindung umfasst bevorzugt zwei Ventile, wobei ein erstes Ventil dem Waschbecken zugeordnet positioniert ist und ein zweites Ventil dem Behälter des WC-Moduls zugeordnet positioniert ist. Durch komplementäres Öffnen und Schließen dieser Ventile kann somit ein Aufnehmen von Grauwasser aus dem Waschbecken und ein Absaugen bzw. Befördern von Grauwasser mittels Vakuumfunktion in den Behälter bevorzugt realisiert werden.

Die Grauwasserverbindung kann ferner einen Füllstandsensor umfassen, welcher dazu ausgebildet ist, bei Überschreiten eines bestimmten Füllstandes eine Beförderung des Grauwassers aus der Grauwasserverbindung in den Behälter mittels der Vakuumfunktion auszulösen. Hierdurch wird vorteilhaft gewähreistet, dass die maximal beförderbare Grauwassermenge durch die Vakuumfunktion des Behälters nicht überschritten wird.

Bevorzugt weist die Grauwasserverbindung ein Druckausgleichventil auf. Dadurch werden mögliche Schädigungen durch Druckabfall an der Leitung vermieden.

Darüber hinaus umfasst das Abwassersystem erfindungsgemäß eine Grauwasseraufbereitungseinheit, wobei die Grauwasseraufbereitungseinheit derart zwischen Waschbecken und Behälter positioniert ist, dass ein erster Grauwasserverbindungsabschnitt das Waschbecken mit der Grauwasseraufbereitungseinheit verbindet und ein zweiter Grauwasserverbindungsabschnitt die Grauwasseraufbereitungseinheit mit dem Behälter des WC-Moduls verbindet, wobei der zweite Grauwassersverbindungsabschnitt zur Aufnahme von mit Schmutzpartikeln angereichertem Grauwasser aus der Grauwasseraufbereitungseinheit ausgebildet ist. Dadurch kann das mit Schmutzpartikeln angereicherte Grauwasser dem Behälter mittels dessen Vakuumfunktion zugeführt werden. Auch hier ergeben sich als Vorteile ein Ersparnis an Platz und ein Verzicht auf eine Hebeanlage oder Pumpe. Schmutzpartikel werden auch als Grauwasserpartikel oder auch Grauwassersedimente bezeichnet, wobei letztere bei auf Sedimentation beruhender Abscheidung Bezeichnung finden. Dieses mit Schmutzpartikeln angereicherte Grauwasser soll nicht wiederverwendet, sondern abgeführt werden.

Die Grauwasseraufbereitungseinheit weist einen Grauwasserauslass zum zweiten Grauwasserverbindungsabschnitt an einem unteren Ende der Grauwasseraufbereitungseinheit auf. Typischerweise basieren Grauwasseraufbereitungseinheiten auf Sedimentation. Mit dem Grauwasserauslass am unteren Ende kann vorteilhaft das mit Schmutzpartikeln angereicherte Grauwasser effizient in den zweiten Grauwasserverbindungsabschnitt und von dort mittels der Vakuumfunktion des Behälters in den Behälter befördert werden.

Bevorzugt umfasst der zweite Grauwasserverbindungsabschnitt ein erstes Ventil und ein zweites Ventil, wobei das erste Ventil der Grauwasseraufbereitungseinheit zugeordnet positioniert ist und das zweite Ventil dem Behälter zugeordnet positioniert ist.

Die Grauwasseraufbereitungseinheit kann dabei eine Überlaufleitung umfassen, wobei die Überlaufleitung mit dem zweiten Grauwasserverbindungsabschnitt verbunden ist. Vorteilhaft kann somit bei einem zu hohen Zufluss von Grauwasser in die Grauwasseraufbereitungseinheit das überschüssige Grauwasser in einfacher Weise mittels der Vakuumfunktion des Behälters zum selbigen Behälter befördert werden.

Die Überlaufleitung kann bevorzugt ein drittes Ventil aufweisen. Somit kann die Überlaufleitung während des Absaugvorgangs mittels Vakuumfunktion entsprechend abgeschlossen und geöffnet werden zur Aufnahme von überschüssigem Grauwasser in den zweiten Grauwasserverbindungsabschnitt.

Bevorzugt umfasst die Grauwasseraufbereitungseinheit eine Überlaufleitung, wobei die Überlaufleitung derart zu einem Fahrzeugboden geführt ist, dass das überlaufende Grauwasser über den Fahrzeugboden auslassbar ist.

Ferner wird ein Fahrzeug beschrieben, welches ein Abwassersystem nach einem der oben beschriebenen Ausführungsformen umfasst.

Das Fahrzeug ist dabei bevorzugt ein motorbetriebenes Fahrzeug, besonders bevorzugt ein Schienenfahrzeug. Insbesondere bei Schienenfahrzeugen können entsprechende Abwassersysteme vorgesehen sein. Das Fahrzeug umfasst jedoch auch andere Verkehrsmittel, wie zum Beispiel Busse, Schiffe, und Flugzeuge. Auch dort können erfindungsgemäße Abwassersysteme zum Einsatz kommen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
Figur 1 ein erfindungsgemäßes Abwassersystem mit einer Grauwasseraufbereitungseinheit gemäß einer ersten Ausführungsform, und
Figur 2 ein erfindungsgemäßes Abwassersystem mit einer Grauwasseraufbereitungseinheit gemäß einer zweiten Ausführungsform.

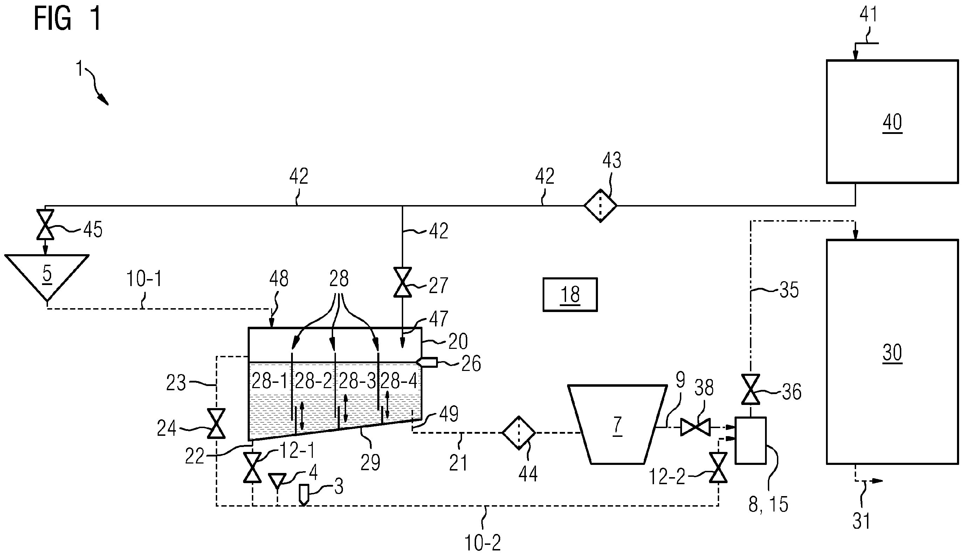

In der Figur 1 ist ein erfindungsgemäßes Abwassersystem 1 nach einer ersten Ausführungsform gezeigt. Das Abwassersystem 1 umfasst dabei ein Waschbecken 5 und ein WC-Modul 7. Ferner umfasst das Abwassersystem 1 einen Behälter 8. Dieser Behälter 8 weist eine Vakuumfunktion auf, mittels derer Schwarzwasser aus dem WC-Modul 7 in den Behälter 8 befördert werden kann. Dies erfolgt hierbei beispielhaft über eine erste Schwarzwasserverbindung 9 mit zwischengeschaltetem fünftem Ventil 38. Das fünfte Ventil 38 ist dabei grundsätzlich geschlossen, wobei bei einem Auslösen der Vakuumfunktion zum Beispiel durch Betätigung eines entsprechenden Schalters durch einen Benutzer des WC-Moduls das fünfte Ventil 38 öffnet und damit das anfallende Schwarzwasser aus dem WC-Modul 7 in den Behälter 8 befördert bzw. eingesaugt wird.

Das Abwassersystem 1 weist im Besonderen eine Grauwasserverbindung 10 auf, welche das Waschbecken 5 mit dem besagten Behälter 8 verbindet. Die Grauwasserverbindung 10 ist dabei zur Aufnahme einer bestimmten Menge an Grauwasser aus dem Waschbecken 5 ausgelegt. Diese Aufnahmekapazität kann rein beispielhaft einer definierten Anzahl von Benutzungen des Waschbeckens entsprechen, wobei die Erfindung nicht darauf beschränkt ist. Die Aufnahmemenge kann dabei auch mit dem Aufnahmevermögen des Behälters abgestimmt sein. Demnach dient die Grauwasserverbindung 10 als Kapazität oder Zwischenpuffer von anfallendem Grauwasser des Waschbeckens 5. Die Verbindung zum mit der Vakuumfunktion ausgestattetem Behälter 8 gewährleistet, dass die Vakuumfunktion des Behälters 8 zusätzlich zu dem oben beschriebenen Absaugen von Schwarzwasser aus dem WC-Modul 7 weiterhin auch dazu verwendet werden kann, das in der Grauwasserverbindung 10 aufgenommene Grauwasser in den Behälter 8 abzusaugen bzw. zu befördern. Das hat den Vorteil, dass ein gemeinsames Abführen aus dem Behälter 8 erfolgen kann und keine zusätzliche Installation bzw. Verrohrung für das Grauwasser benötigt wird. Für das gemeinsame Abführen kann auch vorteilhaft die Vakuumfunktion des Behälters 8 verwendete werden. Eine weitere Pumpe oder Hebeanlage sowohl für die Grauwasserverbindung 10 als auch zum Abführen aus dem Behälter 8 kann demnach entfallen. Das mit dem Schwarzwasser aus dem WC-Modul 8 und dem Grauwasser aus der Grauwasserverbindung 10 im Behälter 8 vereinigte Abwasser stellt dabei entsprechend ein Schwarzwasser dar.

In dieser beispielhaften Ausführungsform ist der Behälter 8 als ein Zwischenbehälter 15 ausgebildet, welcher mit einem Abwassertank 30 verbunden ist. Zum Befördern von dem Schwarzwasser aus dem Zwischenbehälter 15 in den Abwassertank 30 kann dabei ebenfalls die Vakuumfunktion des Behälters 8 verwendet werden, wobei hierbei typischerweise mit Überdruck dieses Schwarzwasser zu dem Abwassertank 30 geführt bzw. befördert wird. Dazu ist ferner eine zweite Schwarzwasserverbindung 35 vorgesehen, die ein viertes Ventil 36 umfasst. Dieses ist dabei offen, wenn mittels Überdruck das Schwarzwasser aus dem Zwischenbehälter 15 in den Abwassertank 30 befördert bzw. gepresst wird, und sonst geschlossen.

In dieser beispielhaften Ausführung ist weiterhin vorgesehen, dass der Abwassertank 30 nicht in einem Unterflurbereich des Fahrzeugs positioniert ist, sondern in dem eigentlichen Fahrzeugbereich oder in einem höher gelegenen Bereich des Fahrzeugs selbst. Die erforderliche Leistung zur Beförderung von Schwarzwasser in einen derartig positionierten Abwassertank 30 wird durch die Vakuumfunktion des Behälters 8 aufgebracht. Eine zusätzliche Pumpe oder Hebeanlage wird vermieden. An dem Abwassertank 30 ist dabei beispielhaft eine Absaugschnittstelle 31 vorgesehen, über die der Abwassertank 30 entleert werden kann.

Das Abwassersystem 1 weist hier eine Grauwasseraufbereitungseinheit 20 auf. Die Grauwasseraufbereitungseinheit 20 ist dabei derart positioniert, dass diese die Grauwasserverbindung 10 in einen ersten Grauwasserverbindungsabschnitt 10-1 und einen zweiten Grauwasserverbindungsabschnitt 10-2 aufteilt.

Der erste Grauwasserverbindungabschnitt 10-1 verbindet das Waschbecken 5 direkt mit der Grauwasseraufbereitungseinheit 20. In der vorliegenden Ausführungsform kann das Grauwasser dabei direkt in die Grauwasseraufbereitungseinheit 20 einlaufen, was durch das hierbei beispielhaft oberhalb der Grauwasseraufbereitungseinheit 20 befindliche Waschbecken 5 gewährleistet wird. In anderen Ausführungen kann alternativ eine Pumpe vorgesehen werden.

Das Grauwasser wird dabei in der Grauwasseraufbereitungseinheit 20 aufbereitet, wobei das Grauwasser in ein mit Schmutzpartikeln angereichertes Grauwasser und ein aufbereitetes Grauwasser getrennt wird. Das aufbereitete Grauwasser wird über eine Versorgungsverbindung 21 dem WC-Modul 7 zugeführt und dort wiederverwendet. Dabei kann ein zweiter Schmutzfilter 44 in der Versorgungsverbindung 21 vorgesehen sein, der eine weitere Reinigungsfunktion des aufbereiteten Grauwassers herbeiführt.

Der zweite Grauwasserverbindungsabschnitt 10-2 verbindet die Grauwasseraufbereitungseinheit 20 mit dem Behälter 8. Dieser besagte zweite Grauwasserverbindungabschnitt 10-2 ist dabei zur Aufnahme des mit Schmutzpartikeln bzw. Grauwassersedimenten angereicherten Grauwassers ausgebildet.

Der zweite Grauwasserverbindungsabschnitt 10-2 weist hierbei Kontrollelemente auf. Der zweite Grauwasserverbindungsabschnitt 10-2 weist demnach in dieser beispielhaften Ausführungsvariante ein erstes Ventil 12-1 und ein zweites Ventil 12-2 auf. Dabei ist das erste Ventil 12-1 dem Waschbecken 5 zugeordnet, wobei dieses in dieser Ausführungsform genauer der Grauwasseraufbereitungseinheit 20 ausgangsseitig zugeordnet ist, während das zweite Ventil 12-2 dem Behälter 8 zugeordnet ist.

Die beiden Ventile 12-1, 12-2 sind dabei bevorzugt als Quetschventile ausgebildet, wobei die Erfindung nicht darauf beschränkt ist. Alternativ kommen auch beispielsweise Schiebeventile in Betracht.

Das erste Ventil 12-1 und das zweite Ventil 12-2 können dabei komplementär betrieben werden, d.h. dass, wenn das erste Ventil 12-1 geöffnet ist, dann ist das zweite Ventil 12-2 geschlossen und umgekehrt. Im ersten Fall kann entsprechend das mit Schmutzpartikeln angereicherte Grauwasser über das erste Ventil 12-1 in dem zweiten Grauwasserverbindungsabschnitt 10-2 gesammelt werden, während im zweiten Fall das mit Schmutzpartikeln angereicherte Grauwasser aus dem zweiten Grauwasserverbindungsabschnitt 10-2 zum Behälter 8 hin mittels der Vakuumfunktion des Behälters 8 abgesaugt bzw. befördert wird.

In einer bevorzugten Ausführung wird bei Auslösen der Vakuumfunktion des Behälters 8 durch beispielsweise Auslösen einer WC-Spülung sowohl das Schwarzwasser aus dem WC-Modul 7 als auch das Grauwasser aus der Grauwasserverbindung 10 in den Behälter 8 abgesaugt bzw. befördert. Dies kann durch ein gleichzeitiges Öffnen des fünften Ventils 38 und des zweiten Ventils 12-2 erfolgen. Dem liegt zu Grunde, dass typischerweise eine Benutzung des WC-Moduls 7 mit einer Benutzung des Waschbeckens 5 einhergeht, so dass die Grauwasserverbindung 10 genügend häufig geleert wird. Alternativ kann eine Entleerung der Grauwasserverbindung 10 auch zu anderen Zeitpunkten zum Beispiel automatisch erfolgen, wobei diese Zeitpunkte nicht mit der Benutzung einer WC-Spülung einhergehen müssen. Beispielsweise können solche Entleerungen mit der unmittelbaren Benutzung des Waschbeckens 5 abgestimmt sein. Die Erfindung umfasst demnach auch den Fall, dass das fünfte Ventil 38 und das zweite Ventil 12-2 unabhängig voneinander geöffnet und geschlossen werden.

Ferner umfasst der zweite Grauwasserverbindungsabschnitt 10-2 beispielhaft ein Druckausgleichsventil 4 sowie ferner einen Füllstandsensor 3. Dieser Füllstandsensor 3 erfasst dabei den Füllstand innerhalb des zweiten Grauwasserverbindungsabschnitts 10-2. Im Besonderen ist der Füllstandsensor 3 dazu ausgebildet, bei Überschreiten eines bestimmten Füllstands, ein Absaugen des Inhalts des zweiten Grauwasserverbindungsabschnitts 10-2 zum Behälter 8 mittels der Vakuumfunktion des Behälters 8 auszulösen, wodurch zum Beispiel eine maximal beförderbare Menge durch die Vakuumfunktion des Behälters 8 nicht überschritten wird.

Hierbei weist die Grauwasserverbindung 10 beispielhaft ein Druckausgleichsventil 4 zur Kompensation insbesondere von Druckabfällen, wobei dabei mögliche Systemschädigungen bzw. Rohrschädigungen vermieden werden.

Bevorzugt weist das Abwassersystem 1 ferner eine Steuereinrichtung 18 auf. Diese ist dazu ausgebildet, die entsprechenden oben beschriebenen Funktionen auszuführen, insbesondere das Öffnen und Schließen der Ventile nach der jeweiligen Funktion. Hierbei und in den folgenden Figuren ist die Steuereinrichtung 18 lediglich schematisch eingezeichnet aus Gründen der Übersichtlichkeit in den Figuren.

In dieser beispielhaften Ausführungsform ist weiterhin das Abwassersystem 1 an eine Frischwasserzufuhr angekoppelt, die rein beispielhaft im Folgenden beschrieben wird. Dazu ist ein Frischwassertank 40 vorgesehen, der über eine Befüllschnittstelle 41 beispielsweise extern befüllt werden kann. Eine Frischwasserleitung 42 führt dabei von dem Frischwassertank 40 sowohl zum Waschbecken 5 als auch zu dem WC-Modul 7, wobei dadurch dem Waschbecken 5 und dem WC-Modul 7 Frischwasser zur Verfügung gestellt wird. Ein erster Schmutzfilter 43, insbesondere als ein Netzfilter ausgebildet, ist dabei ausgangsseitig vom Frischwassertank 40 positioniert. Ferner ist ein zweiter Schmutzfilter 44, insbesondere ein Netzfilter, eingangsseitig zum WC-Modul 7 vorgesehen. Vor dem Waschbecken 5 ist ein Waschbeckenventil 45, beispielsweise innerhalb einer Armatur, zum kontrollierten Auslass von Frischwasser in das Waschbecken eingebracht.

Die Grauwasseraufbereitungseinheit 20 weist in dieser Ausführungsform beispielhaft einen Grauwasserauslass 22 an einem unteren Ende der Grauwasseraufbereitungseinheit 20 auf. Bevorzugt ist dabei die Grauwasseraufbereitungseinheit 20 ein auf Sedimentierung basierendes System, bei dem sich am unteren Ende die entsprechenden Schmutzpartikel des Grauwassers bzw. das mit Grauwassersedimenten angereicherte Grauwasser absetzen, so dass mittels der Positionierung des Grauwasserauslasses 22 dieser Anteil besonders effektiv in den zweiten Grauwasserverbindungsabschnitt 10-2 ausgelassen werden kann. Die Erfindung ist jedoch nicht auf eine bestimmte Art der Grauwasseraufbereitungseinheit 20 beschränkt. Auch alternative Aufbereitungsformen sind von der Erfindung umfasst.

Die Grauwasseraufbereitungseinheit 20 weist beispielhaft in dieser Ausführungsform eine Überlaufleitung 23 auf für den Fall einer übermäßigen Befüllung der Grauwasseraufbereitungseinheit 20. Ein solcher Fall kann beispielsweise dadurch entstehen, dass zu wenig aufbereitetes Grauwasser aus der Grauwasseraufbereitungseinheit 20 zu dem WC-Modul 7 abgeführt wird durch geringe Nutzung des WC-Moduls 7 relativ zur Nutzung des Waschbeckens 5.

Die Überlaufleitung 23 wird in dieser Ausführungsvariante beispielhaft dem zweiten Grauwasserverbindungsabschnitt 10-2 über ein drittes Ventil 24 zugeführt. Dieses überschüssige Grauwasser kann damit mittels der Vakuumfunktion zum Behälter 8 über den zweiten Grauwasserverbindungsabschnitt 10-2 befördert werden. Beim Absaugvorgang, d.h. bei Aktivierung der Vakuumfunktion des Behälters 8, sind dabei das dritte Ventil 24 und das erste Ventil 12-1 geschlossen, wobei das zweite Ventil 12-2 offen ist. Auch hier kann das dritte Ventil 24 beispielsweise als ein Quetschventil oder alternativ als ein Schiebeventil ausgeführt sein, wobei die Erfindung nicht darauf beschränkt ist.

Während des Normalbetriebs der Grauwasseraufbereitungseinheit 20, d. h. bei einem ausgeglichenen Verhältnis aus Betätigungen des Waschbeckens 5 und der WC-Spülung des WC-Moduls 7, soll bevorzugt kein Grauwasser in die Überlaufleitung 23 gelangen. Durch Öffnen des ersten Ventils 12-1 gelangt das mit Schmutzpartikeln angereicherte Grauwasser aus der Grauwasseraufbereitungseinheit 20 in den zweiten Grauwasserverbindungsabschnitt 10-2. Eine solche Öffnung kann beispielsweise nur zu bestimmten Zeitpunkten erfolgen, zum Beispiel nach Beendigung der täglichen Betriebsdauer zum Durchführen einer automatischen Reinigungsfunktion. Zum Absaugen bzw. zum Befördern wird anschließend das erste Ventil 12-1 geschlossen und das zweite Ventil 12-2 geöffnet, so dass das mit Schmutzpartikeln oder Grauwassersedimenten angereicherte Grauwasser in den Behälter 8 abgesaugt werden kann.

Die in diesem Ausführungsbeispiel verwendete Grauwasseraufbereitungseinheit 20 wird hierbei nur schematisch beschrieben, da die vorliegende Erfindung nicht auf eine bestimmte Ausführungsform der Grauwasseraufbereitungseinheit 20 beschränkt ist. Die Grauwasseraufbereitungseinheit 20 umfasst rein beispielhaft einzelne Kammern 28-1, 28-2, 28-3 28-4, eine erste Kammer 28-1, eine zweite Kammer 28-2, eine dritte Kammer 28-3 und eine vierte Kammer 28-4, die jeweils durch Aufbereitungselemente 28, hier beispielhaft Trennwände mit dünnen Spalten und beweglichen Kulissen, getrennt sind. Der Boden 29 weist hierbei beispielhaft eine positive Steigung bzw. eine ansteigende Schräge von der ersten Kammer 28-1 hin zur vierten Kammer 28-4 auf. Ein Grauwasserzulauf 48 des ersten Grauwasserverbindungsabschnitts 10-1 vom Waschbecken 5 führt dabei in die erste Kammer 28-1, so dass das Grauwasser ausgehend von der ersten Kammer 28-1 hin zur vierten Kammer 28-4 durch die Aufbereitungselemente 28 sukzessive gereinigt wird. Ein Ablauf 49 für das aufbereitete Grauwasser in eine Versorgungsverbindung 21 zum WC-Modul 7 erfolgt entsprechend aus der vierten Kammer 28-4. Der tiefste Punkt der ersten Kammer 28-1, in dem sich das Grauwassersediment bzw. die Schmutzpartikel sammeln, bildet ferner das unter Ende, an dem der Grauwasserauslass 22 zum zweiten Grauwasserverbindungsabschnitt 10-2 ansetzt. Zur vierten Kammer 28-4 ist ferner ein Frischwasserzulauf 47 vorgesehen, an den eine Frischwasserleitung 42 anknüpft, die mit dem Frischwassertank 40 verbunden ist. Wenn beispielsweise der Füllstand in der Grauwasseraufbereitungseinheit 20 zu niedrig ist, was mittels eines Kontrollsensors 26 festgestellt werden kann, so kann ein Kontrollventil 27 zur Frischwasserleitung 42 öffnen und den Füllstand der Grauwasseraufbereitungseinheit 20 entsprechend durch Zufluss von Frischwasser anheben. Es sei ferner nochmals betont, dass die vorliegende Ausführungsform einer Grauwasseraufbereitungseinheit 20 lediglich ein Ausführungsbeispiel darstellt, wobei die Erfindung nicht darauf beschränkt ist.

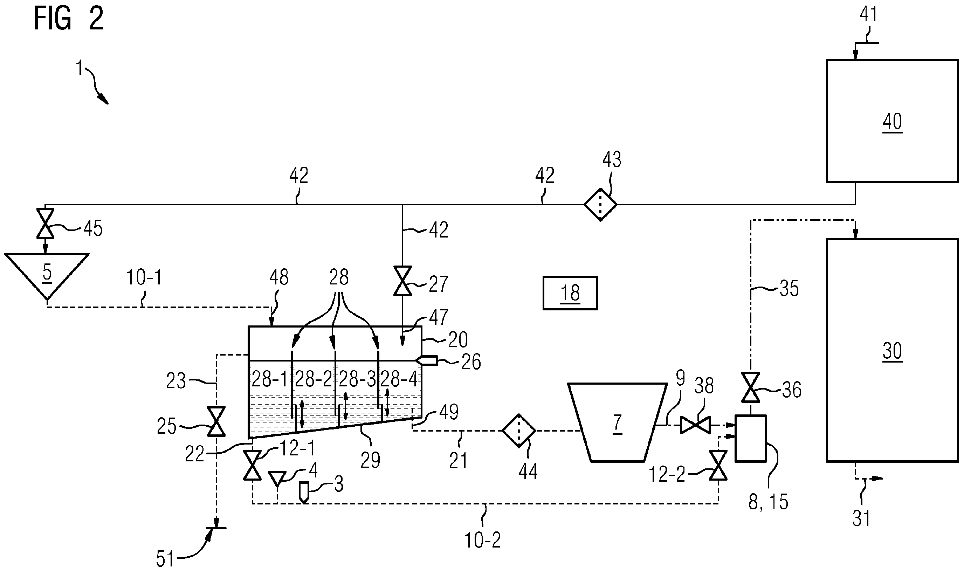

In der Figur 2 ist ein erfindungsgemäßes Abwassersystem 1 gemäß einer zweiten Ausführungsform beschrieben. Gegenüber Figur 1 unterscheidet sich diese beispielhafte Ausführungsform darin, dass die Überlaufleitung 23 der Grauwasseraufbereitungseinheit 20 nicht mit dem zweiten Grauwasserverbindungsabschnitt 10-2 verbunden ist, sondern zu einem Fahrzeugboden 51 des Fahrzeugs geführt ist, so dass das überschüssige Grauwasser in Ausnahmefällen über den Fahrzeugboden 51 des Fahrzeugs abgelassen werden kann. Bei Schienenfahrzeugen wird das überschüssige Grauwasser demnach in das Gleisbett geführt. Hierbei ist beispielhaft ein Rückschlagventil 25 in der Überlaufleitung 23 vorgesehen. Dieses sorgt für eine Reduktion von Druckstößen. Ein Quetschventil oder Schiebeventil wird nicht benötigt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen im Rahmen der Ansprüche können vom Fachmann hieraus abgeleitet werden, ohne den Schutzumfang der Erfindung zu verlassen.

## Patentansprüche

1. Abwassersystem (1) für ein Fahrzeug, umfassend:
- ein Waschbecken (5);
- ein WC-Modul (7);
- ein Behälter (8), welcher eine Vakuumfunktion zum Befördern von Schwarzwasser aus dem WC-Modul (7) in den Behälter (8) aufweist, wobei der Behälter (8) ein Zwischenbehälter (15) ist, der mit einem Abwassertank (30) verbunden ist;
- eine Grauwasserverbindung (10), welche das Waschbecken (5) mit dem Behälter (8) verbindet und zur Aufnahme von Grauwasser aus dem Waschbecken (5) ausgebildet ist, wobei der Behälter (8) dazu ausgebildet ist, mittels der Vakuumfunktion das Grauwasser aus der Grauwasserverbindung (10) in den Behälter (8) zu befördern;
**dadurch gekennzeichnet, dass** das Abwassersystem (1) eine Grauwasseraufbereitungseinheit (20) umfasst, wobei die Grauwasseraufbereitungseinheit (20) derart zwischen Waschbecken (5) und Behälter (8) positioniert ist, dass ein erster Grauwasserverbindungsabschnitt (10-1) das Waschbecken (5) mit der Grauwasseraufbereitungseinheit (20) verbindet und ein zweiter Grauwasserverbindungsabschnitt (10-2) die Grauwasseraufbereitungseinheit (20) mit dem Behälter (8) des WC-Moduls (7) verbindet, wobei der zweite Grauwasserverbindungsabschnitt (10-2) zur Aufnahme von mit Schmutzpartikeln angereichertem Grauwasser aus der Grauwasseraufbereitungseinheit (20) ausgebildet ist, wobei die Grauwasseraufbereitungseinheit (20) einen Grauwasserauslass (22) zum zweiten Grauwasserverbindungsabschnitt (10-2) an einem unteren Ende der Grauwasseraufbereitungseinheit (20) aufweist.

2. Abwassersystem (1) nach Anspruch 1, wobei der Behälter (8) derart ausgebildet ist, dass bei Auslösen der Vakuumfunktion sowohl Schwarzwasser aus dem WC-Modul (7) als auch Grauwasser aus der Grauwasserverbindung (10) in den Behälter (8) befördert wird.

3. Abwassersystem (1) nach einem der vorherigen Ansprüche, wobei die Grauwasserverbindung (10) zwei Ventile (12-1, 12-2) umfasst, wobei ein erstes Ventil (12-1) dem Waschbecken (5) zugeordnet positioniert ist und ein zweites Ventil (12-2) dem Behälter (8) des WC-Moduls (7) zugeordnet positioniert ist.

4. Abwassersystem (1) nach einem der vorherigen Ansprüche, wobei die Grauwasserverbindung (10) einen Füllstandsensor (3) umfasst, welcher dazu ausgebildet ist, bei Überschreiten eines bestimmten Füllstandes eine Beförderung des Grauwassers aus der Grauwasserverbindung (10) in den Behälter (8) mittels der Vakuumfunktion auszulösen.

5. Abwassersystem (1) nach einem der vorherigen Ansprüche, wobei die Grauwasserverbindung (10) ein Druckausgleichventil (4) aufweist.

6. Abwassersystem (1) nach einem der vorherigen Ansprüche, wobei der zweite Grauwasserverbindungsabschnitt (10-2) das erste Ventil (12-1) und das zweite Ventil (12-2) umfasst, wobei das erste Ventil (12-1) der Grauwasseraufbereitungseinheit (20) zugeordnet positioniert ist und das zweite Ventil (12-2) dem Behälter (8) des WC-Moduls (7) zugeordnet positioniert ist.

7. Abwassersystem (1) nach einem der vorherigen Ansprüche, wobei die Grauwasseraufbereitungseinheit (20) eine Überlaufleitung (23) umfasst, wobei die Überlaufleitung (23) mit dem zweiten Grauwasserverbindungsabschnitt (10-2) verbunden ist.

8. Abwassersystem (1) nach Anspruch 7, wobei die Überlaufleitung (23) ein drittes Ventil (24) umfasst.

9. Abwassersystem (1) nach einem der vorherigen Ansprüche, wobei die Grauwasseraufbereitungseinheit (20) eine Überlaufleitung (23) umfasst, wobei die Überlaufleitung (23) derart zu einem Fahrzeugboden (51) geführt ist, dass das überlaufende Grauwasser über den Fahrzeugboden (51) auslassbar ist.

10. Fahrzeug, umfassend ein Abwassersystem (1) nach einem der vorherigen Ansprüche 1 bis 9.

## Claims

1. Wastewater system (1) for a vehicle, comprising:
- a washbasin (5);
- a WC module (7);
- a container (8) which has a vacuum function for conveyance of black water from the WC module (7) into the container (8), wherein the container (8) is an intermediate container (15) which is connected to a wastewater tank (30);
- a grey-water connection (10) which connects the washbasin (5) to the container (8) and is configured for receiving grey water from the washbasin (5), wherein the container (8) is configured for conveyance of the grey water from the grey-water connection (10) into the container (8) by means of the vacuum function;
**characterized in that** the wastewater system (1) comprises a grey-water treatment unit (20), wherein the grey-water treatment unit (20) is positioned between the washbasin (5) and the container (8) in such a way that a first grey-water connection section (10-1) connects the washbasin (5) to the grey-water treatment unit (20) and a second grey-water connection section (10-2) connects the grey-water treatment unit (20) to the container (8) of the WC module (7), wherein the second grey-water connection section (10-2) is configured for receiving from the grey-water treatment unit (20) grey water laden with dirt particles, wherein the grey-water treatment unit (20) has a grey-water outlet (22) to the second grey-water connection section (10-2) at a lower end of the grey-water treatment unit (20).

2. Wastewater system (1) according to Claim 1, wherein the container (8) is designed in such a way that, when the vacuum function is triggered, there are conveyed into the container (8) both black water from the WC module (7) and grey water from the grey-water connection (10).

3. Wastewater system (1) according to either of the preceding claims, wherein the grey-water connection (10) comprises two valves (12-1, 12-2), wherein a first valve (12-1) is positioned so as to be assigned to the washbasin (5) and a second valve (12-2) is positioned so as to be assigned to the container (8) of the WC module (7).

4. Wastewater system (1) according to one of the preceding claims, wherein the grey-water connection (10) comprises a fill-level sensor (3) which is configured for triggering conveyance of the grey water from the grey-water connection (10) into the container (8) by means of the vacuum function if a particular fill level is exceeded.

5. Wastewater system (1) according to one of the preceding claims, wherein the grey-water connection (10) has a pressure compensation valve (4).

6. Wastewater system (1) according to one of the preceding claims, wherein the second grey-water connection section (10-2) comprises the first valve (12-1) and the second valve (12-2), wherein the first valve (12-1) is positioned so as to be assigned to the grey-water treatment unit (20) and the second valve (12-2) is positioned so as to be assigned to the container (8) of the WC module (7).

7. Wastewater system (1) according to one of the preceding claims, wherein the grey-water treatment unit (20) comprises an overflow line (23), wherein the overflow line (23) is connected to the second grey-water connection section (10-2).

8. Wastewater system (1) according to Claim 7, wherein the overflow line (23) comprises a third valve (24).

9. Wastewater system (1) according to one of the preceding claims, wherein the grey-water treatment unit (20) comprises an overflow line (23), wherein the overflow line (23) is routed to a vehicle floor (51) in such a way that the overflowing grey water can be discharged via the vehicle floor (51).

10. Vehicle comprising a wastewater system (1) according to one of the preceding Claims 1 to 9.

## Revendications

1. Système (1) d'eaux usées pour un véhicule, comprenant :
- une cuvette (5) ;
- un module (7) de WC ;
- un récipient (8), qui a une fonction de vide pour véhiculer des eaux noires du module (7) de WC dans le récipient (8), le récipient (8) étant un récipient (15) intermédiaire qui communique avec un réservoir (30) d'eaux usées ;
- une communication (10) d'eaux grises, qui met la cuvette (5) en communication avec le réservoir (8) et qui est constituée pour la réception d'eaux grises provenant de la cuvette (5), dans lequel le réservoir (8) est constitué pour véhiculer au moyen de la fonction de vide les eaux grises de la communication (10) d'eaux grises au récipient (8) ;
**caractérisé en ce que** le système (1) d'eaux usées comprend une unité (20) de traitement des eaux grises, l'unité (20) de traitement des eaux grises étant placée entre la cuvette (5) et le récipient (8), de manière à ce qu'un premier tronçon (10-1) de communication d'eaux grises mette la cuvette (5) en communication avec l'unité (20) de traitement des eaux grises et de manière à ce qu'un deuxième tronçon (10-2) de communication des eaux grises mette l'unité (20) de traitement des eaux grises en communication avec le réservoir (8) du module (7) de WC, dans lequel le deuxième tronçon (10-2) de communication des eaux grises est constitué pour la réception des eaux grises enrichies en particules de saleté provenant de l'unité (20) de traitement des eaux grises, dans lequel l'unité (20) de traitement des eaux grises a une sortie (22) des eaux grises vers le deuxième tronçon (10-2) de communication des eaux grises à une extrémité inférieure de l'unité (20) de traitement des eaux grises.

2. Système (1) d'eaux usées suivant la revendication 1, dans lequel le récipient (8) est constitué pour, au déclenchement de la fonction de vide, envoyer dans le récipient (8) tant des eaux noires provenant du module (7) de WC qu'également des eaux grises provenant de la communication (10) d'eaux grises.

3. Système (1) d'eaux usées suivant l'une des revendications précédentes, dans lequel la communication (10) d'eaux grises comprend deux robinets (12-1, 12-2), un premier robinet (12-1) étant placé de manière à être associé à la cuvette (5) et un deuxième robinet (12-2) étant placé de manière à être associé au récipient (8) du module (7) de WC.

4. Système (1) d'eaux usées suivant l'une des revendications précédentes, dans lequel la communication (10) d'eaux grises comprend un capteur (3) de niveau, qui est constitué pour déclencher, lorsqu'un niveau défini est dépassé, un passage des eaux grises de la communication (10) d'eaux grises au récipient (8) au moyen de la fonction de vide.

5. Système (1) d'eaux usées suivant l'une des revendications précédentes, dans lequel la communication (10) d'eaux grises a une soupape (4) de compensation de la pression.

6. Système (1) d'eaux usées suivant l'une des revendications précédentes, dans lequel le deuxième tronçon (10-2) de communication des eaux grises comprend le premier robinet (12-1) et le deuxième robinet (12-2), dans lequel le premier robinet (12-1) est placé en étant associé à l'unité (20) de traitement d'eaux grises et le deuxième robinet (12-2) est placé en étant associé au récipient (8) du module (7) de WC.

7. Système (1) d'eaux usées suivant l'une des revendications précédentes, dans lequel l'unité (20) de traitement des eaux grises comprend un conduit (23) de trop-plein, dans lequel le conduit (23) de trop-plein communique avec le deuxième tronçon (10-2) de communication des eaux grises.

8. Système (1) d'eaux usées suivant la revendication 7, dans lequel le conduit (23) de trop-plein comprend un troisième robinet (24).

9. Système (1) d'eaux usées suivant l'une des revendications précédentes, dans lequel l'unité (20) de traitement d'eaux grises comprend un conduit (23) de trop-plein, dans lequel le conduit (23) de trop-plein passe par rapport à un fond (51) du véhicule, de manière à ce que des eaux grises, débordant, puissent s'évacuer par le fond (51) du véhicule.

10. Véhicule, comprenant un système (1) d'eaux usées suivant l'une des revendications 1 à 9 précédentes.
